# EUROPEAN PATENT SPECIFICATION

(11) **EP 2 720 464 B1**
(45) Date of publication and mention of the grant of the patent: **10.01.2018**
(21) Application number: 12007049.5
(22) Date of filing: 11.10.2012
(51) Int. Cl.: H04N 13/02, G06F 3/01, H04N 5/225, H04N 5/232, H04N 13/04

(54) **Generating image information**
Erzeugung von Bildinformationen
Génération des informations d'image

(43) Date of publication of application: 16.04.2014
(73) Proprietor: Sony Mobile Communications Inc., Shinagawa-ku Tokyo 140-0002 (JP)
(72) Inventor: Thörn, Ola, 216 12 Limhamn (SE); De Léon, David, 224 57 Lund (SE); Mårtensson, Linus, 222 35 Lund (SE); Kristensson, Andreas, 247 35 Södra Sandby (SE); Aronsson, Pär-Anders, 214 24 Malmö (SE)
(74) Representative: Banzer, Hans-Jörg

(56) References cited:
- EP-A2- 2 410 733
- WO-A1-2012/083989
- US-A1- 2009 245 600
- US-A1- 2009 256 904
- US-A1- 2010 321 482
- US-A1- 2011 273 466
- US-A1- 2012 127 203
- US-B1- 7 460 150

## Description

### FIELD OF THE INVENTION

The present invention relates to a method for generating an image information, especially to a generation of an image information based on a light field information captured for example by a so-called light field camera or plenoptic camera. The present invention relates furthermore to a device implementing the method for generating an image information and to a light field camera.

### BACKGROUND OF THE INVENTION

In conventional cameras, so-called digital cameras, an image of an environment or scene to be captured is reproduced on an image sensor, for example a CCD sensor or a CMOS sensor, via a lens. Data from the image sensor comprises for example a plurality of pixel data each representing a color and brightness of the image reproduced on the image sensor. The image data captured by the image sensor can be directly reproduced by a display to a user.

A new type of camera which has been developed and researched in recent years is the so-called light field camera or plenoptic camera, which is one type of a so-called computational camera. In light field cameras, the image is not directly reproduced on the image sensor, such that essentially the output of the image sensor directly shows the captured scene, but light rays from the scene or environment are guided in light field cameras to an image sensor arrangement in an unconventional manner. For example, light rays originating from a single object in the scene to be captured may be guided to different locations remote from each other on the image sensor arrangement, which corresponds to viewing the object from different directions. To this end, for example a conical mirror may be arranged in front of a lens. In other implementations, an optic used for guiding light from a scene to be recorded to the image sensor arrangement may be variable, for example by varying geometric or radiometric properties. Furthermore, light field cameras may comprise an array of sub-cameras capturing the scene from different perspectives.

Unlike conventional cameras, in light field cameras a more sophisticated processing of the data captured by the image sensors or the sub-cameras is necessary to provide the final image. On the other hand, in many cases there is a higher flexibility in setting parameters like focus plane of the final image. For example, by combining the images from the sub-cameras it is possible to achieve a number of attractive features, for example refocusing the image after capturing.

In this context, EP2 410 733 A2 discloses a camera system and a method of displaying photos. Photos captured using a light-field camera may be displayed on a display. The focus of the photo is adjusted to place an object at which the user is looking into focus. For example, depending on eye gaze of the user, the focus of the displayed photo will be adjusted to correspond to an object present at the location in the photo at which the user is looking.

US 2011/0273466 A1 relates to a view-dependent rendering system. An area of interest to a viewer may be determined, for example, by identifying an area of an image as rendered on the display at which the viewer is gazing. For example, the viewer's eye movement may be tracked to determine a line of view from the viewer's eye to a region of the display. Upon determination of the area of interest the imaging property of the area of interest is adjusted, for example by focus, sharpness, white balance, dynamic range, resolution, brightness and tone mapping.

US 2012/0127203 A1 relates to an image processing device which includes capture optics for capturing light-field information for a scene, and a display unit for providing a display of the scene to a viewer. A tracking unit tracks relative positions of a viewer's head and the display and the viewer's gaze to adjust the display based on the relative positions and to determine a region of interest on the display.

US 2009/0256904 A1 relates to a system for 3-dimensional display of image data, which may be applied for example to a virtual 3D conference room. To support the use of goggles/earphones, multiple cameras and microphones are arrayed on walls to gain inputs from different vantages as data for computing 3D perspective for each participant from their location in the room. The user's pupils and their focus are tracked, and the system responds with detail imagery in the eyes' focus area and with less detail in the peripheral zone outside the eyes' focus area. This allows the optimum 3D perspective and focus for the user.

US 2010/0321482 A1 relates to remotely controlling a setting of a video camera. Video from the video camera is displayed to a user using a video display. At least one eye of the user is imaged as the user is observing the video display. A change in an image of at least one eye of the user is measured over time, and an eye/head activity variable is calculated from the measured change in the image using an eye-tracker. The eye/head activity variable is translated into a camera control setting, and an actuator connected to the video camera is instructed to apply the camera control setting to the video camera using a processor.

WO 2012/083989 A1 relates to a method of controlling audio recording using an electronic device. The electronic device comprises a microphone arrangement having a directivity pattern. A target direction relative to the electronic device is automatically determined in response to sensor data representing at least a portion of an area surrounding the electronic device. The microphone arrangement is automatically controlled in response to the determined target direction to adjust an angular orientation of the directivity pattern relative to the electronic device. The captured sensor data may have various forms depending on the specific implementation of the sensor. For example, the sensor may include an image sensor for recording a user's eye for determining an eye gaze direction.

US 7,460,150 B1 discloses a system which may provide images from a location under surveillance to a video output device and/or recorder provided as part of a monitoring station. For instance, when the location comprises a public space, such as a train station, a gaze detection camera or unit may monitor the gazes of persons at the location. In response to determining that a majority of the persons at the location are looking at a particular area within that location, an imaging camera can be controlled to output imaged data that includes that particular area. Furthermore, an audio input may comprise a directional microphone. Information regarding the location of an area of interest within the scene determined using the direction of the gazes of persons at the location can be used to select a microphone within or near the area of interest, or to orient a directional microphone towards the area of interest.

However, controlling of the new flexibility and features of light field cameras requires intuitive control means to increase acceptance and user benefit of light field cameras. Therefore, there is a need for aiding a user to control new features of light field cameras.

### SUMMARY OF THE INVENTION

According to the present invention, this object is achieved by a method for generating an image information as defined in claim 1 and a system as defined in claim 12. The dependent claims define preferred and advantageous embodiments of the invention.

According to an aspect of the present invention, a method for generating image information is provided. According to the method, a light field information of an environment or a scene is captured and a gaze information is detected, which indicates a position on a display at which a user is gazing. In other words, when the user is looking at a certain position on the display unit, this certain position is detected as the gaze information. Based on the light field information and the gaze information an image information is generated. Using the gaze information for generating the image information from the light field information allows for example setting a focus on a specific object in the environment, zooming in or out in the image, or optimizing so-called high dynamic range information like a contrast or a color range for a certain object or area in the image.

Furthermore, an audio information of the environment is captured with an array microphone or an array of microphones, and an audio output based on the audio information and the position in the environment is generated. The array microphone captures comparable to the light field camera an acoustic field information of the environment. Thus, audio information originating from a certain position in the environment can be generated as the audio output wherein noise from other positions in the environment can be reduced. For example, when a crowd of people talking to each other is located in the environment, the user may gaze at a certain talking person. The gaze information indicates the position on the display unit where the person is displayed, and a corresponding position in the environment is determined. In the generated image information the head of the person may be focused. The audio output generated based on the audio information from the array microphone and the position in the environment includes therefore essentially audio information originating from the person, with noise from the talking other persons being reduced. Thus, a perceivability of the speech of the person can be increased.

According to an embodiment, based on the light field information and the gaze information a two-dimensional or a three-dimensional image is rendered. Depending on the display which is used for displaying the image information to the user, a two-or three-dimensional image may be generated and displayed. Light field information allows to reconstruct an image information from different perspectives and therefore two-dimensional as well as three-dimensional or stereoscopic images can be reconstructed.

According to a further embodiment, the light field information is captured as a four-dimensional light field information with a light field camera. Devices for capturing four-dimensional light field information may include a plurality of cameras arranged for example in an arc or in an array, or an optical system in which an array of microlenses is inserted in the optical path.

According to another embodiment, the generated image information is displayed on the display unit to the user. By changing the position the user is looking at, a new gaze information can be generated and used for generating a correspondingly changed image information based on the light field information. The light field information may be updated continuously such that the generated image information is a live video of the environment captured. The light field information may be captured at a certain point in time, for example on a user demand, and the image information may be generated based on the light field information captured at this certain point in time. Thus, by changing the position on the display unit the user is looking at, different image information can be generated from the same light field information having different properties, for example a different focus plane or a different high dynamic range information.

According to some embodiments, the image information is generated by determining a position in the environment which corresponds to the position on the display unit the user is gazing at. For example, a focus plane for generating the image information can be set according to a distance between the position in the environment and the light field camera. Furthermore, a scaled up or scaled down image information containing at least the position in the environment can be generated. Moreover, high dynamic range information like a color information, a contrast information or a brightness information of the image information can be adapted based on a color information, contrast information and brightness information, respectively, of the light field information at the position in the environment. For example, the display unit may have a lower color depth than the color depth provided in the light field information. When the user is looking at a certain position, an area around this certain position may have color information which comprises only a part of the color depth provided by the light field information. The color information of this area where the user is looking at may be generated in the image information using the full available color depth provided for the image information thus providing a more detailed color representation of this area to the user. Similarly, a more detailed contrast and brightness information may be provided in the image information and displayed to the user.

According to an embodiment, a further gaze information is detected which indicates a further position on a further display unit at which a further user is gazing. Based on the light field information and the further gaze information a further image information is generated. The light field information comprises information from which different image information can be generated having for example a different focus plane. Thus, the light field information captured for example by a single light field camera can be provided to different display units of different users and for each user a specific image information can be generated depending on the gaze information of the respective user. For example, a first user may look at a first position on the display unit and the image information generated for the first user may be focused on an object at a corresponding first position in the environment. Based on the same light field information a second user may look at a second different position and a second image information may be generated focusing on an object at the position the second user is looking at. In other words, the same light field information can be provided to a plurality of users and for each user a specific image information can be generated taking into account the position the user is looking at.

According to a further embodiment, a plurality of gaze information can be detected over a period of time. Each gaze information indicates a respective position on the display unit the user is gazing at. The gaze information is determined depending on the plurality of gaze information. For example, changing the focus in the generated image information may only be performed, when the user is looking at a certain position for a predetermined amount of time. Furthermore, a zooming into the image, i.e. a generation of a scaled up image information, may be performed, when the user looks continuously at the certain position for an even longer time. Moreover, a scaled down image information, i.e. a zoomed out image, may be generated, when the user is varying the position where he is looking at more frequently. Thus, the generation of the image information can be controlled intuitively by just looking at the generated image on the display unit.

According to a further aspect of the present invention, a system comprising a light field camera for capturing a light field information of an environment, a microphone array for capturing an acoustic field information of the environment which is aligned with the light field information, a device located remote from the light field camera, and a data communication coupling the light field camera and the device is provided. The device, for example a mobile phone, a personal digital assistant, a mobile music player, a tablet computer, a laptop computer, a notebook computer or a navigation system, comprises an input for receiving a light field information of the environment via the data communication, and a display unit for displaying image information to a user. The device comprises furthermore a detecting unit for detecting a gaze information indicating a position on the display unit the user is gazing at. The device or the light filed camera comprises a processing unit which is configured to generate the image information based on the light field information and the gaze information, to determine a position in the environment which corresponds to the position on the display unit the user is gazing at, and to generate an audio output based on the acoustic field information and the position in the environment to include audio information originating from the position in the environment which corresponds to the position on the display unit at which the user is gazing. The system may be adapted to perform the above-described method and comprises therefore the above-described advantages.

According to an embodiment, the detecting unit comprises an infrared camera. For detecting, where a user is looking or gazing at, a tracking of the pupils of the user may be tracked by a camera. Pupils provide a much better reflection of infrared light than of visible light. Therefore, a tracking of the pupils can be reliably performed using infrared light. The device may comprise additionally an infrared illumination source or a plurality of infrared illumination sources for illuminating the face and the eyes of the user. The most widely used current designs are video-based eye trackers. A camera focuses on one or both eyes and records their movement as the viewer looks at some kind of stimulus. Most modern eye-trackers use the centre of the pupil and infrared / near-infrared non-collimated light to create corneal reflections. The vector between the pupil centre and the corneal reflections can be used to compute the point of regard on surface or the gaze direction. A simple calibration procedure of the individual is usually needed before using the eye tracker. Two general types of eye tracking techniques are used: Bright Pupil and Dark Pupil. Their difference is based on the location of the illumination source with respect to the optics. If the illumination is coaxial with the optical path, then the eye acts as a retroreflector as the light reflects off the retina creating a bright pupil effect similar to red eye. If the illumination source is offset from the optical path, then the pupil appears dark because the retroreflection from the retina is directed away from the camera. Bright Pupil tracking creates greater iris/pupil contrast allowing for more robust eye tracking with all iris pigmentation and greatly reduces interference caused by eyelashes and other obscuring features. It also allows for tracking in lighting conditions ranging from total darkness to very bright. But bright pupil techniques are not effective for tracking outdoors as extraneous infrared sources interfere with monitoring.

In some embodiments the detecting unit may comprise a light field camera. Thus, a light field information of the user and an environment around the user may be provided to other users facilitating for example video conferencing. The light field camera may be configured to detect light in or near the infrared spectrum. For example, one or more sub cameras of the light field camera may be sensitive to light in or near the infrared spectrum, whereas other sub cameras of the light field camera may be sensitive to light in the visible spectrum. Furthermore, one or more infrared illumination sources may be provided for illuminating the environment to be captured by the light field camera, e.g. an environment where the user is located. Therefore, the light field camera may be used for detecting where the user is looking or gazing at.

As can be seen from the above-described device and light field camera, the processing for generating the image information based on the light field information and the gaze information may be performed in either the device or the light field camera. The processing may be performed in either the device or the light field camera depending on the available processing power or the communication bandwidth between the device and the light field camera.

Although specific features described in the above summary and the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows a device and a light field camera according to embodiments of the present invention.
Fig. 2 shows a device comprising a light field camera according to an embodiment of the present invention.
Fig. 3 shows method steps according to an embodiment of the present invention.

### DETAILED DESCRIPTION OF PREFERRED EMBODIMENTS

In the following, exemplary embodiments of the invention will be described in more detail. It has to be understood that the features of the various exemplary embodiments described herein may be combined with each other unless specifically noted otherwise. Same reference signs in the various drawings and the following description refer to similar or identical components.

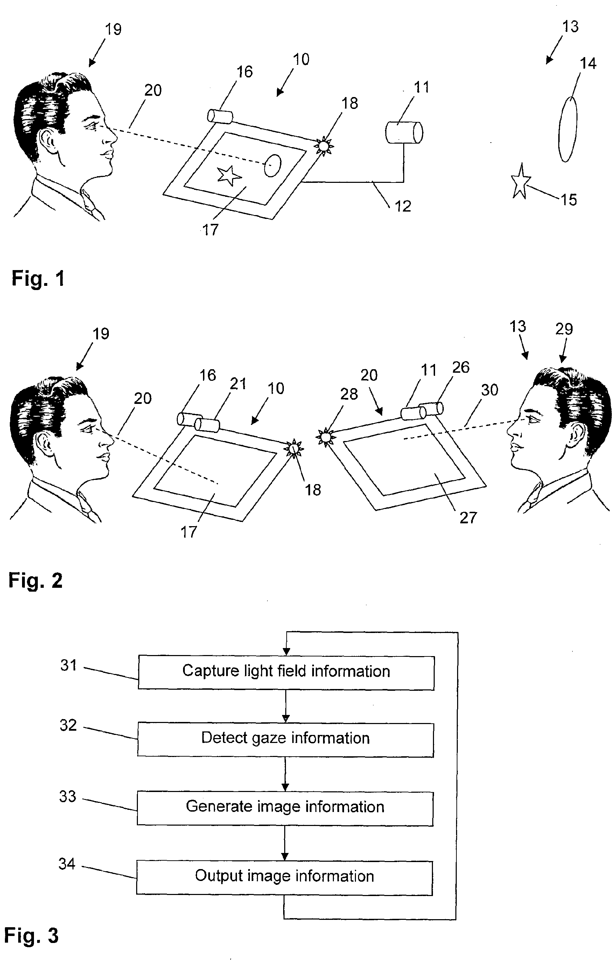

Fig. 1 shows a system comprising a device 10, for example a mobile device like a tablet PC or a mobile phone, and a light field camera 11 which may also be called plenoptic camera. The light field camera 11 is located remote from the device 10. The light field camera 11 is coupled to the device 10 via a connection 12 which may comprise any kind of suitable data communication, for example an Ethernet connection or a wireless connection like Bluetooth or WLAN. The light field camera 11 may comprise an array camera for detecting a light field information of an environment 13. The environment 13 comprises in this exemplary embodiment a circular object 14 and a star-shaped object 15. The objects 14, 15 are located in a different distance to the light field camera 11, for example, the star 15 may be located in closer vicinity to the light field camera 11 than the circle 14.

The device 10 comprises a detecting unit 16, for example an infrared camera, a display unit 17 and an infrared illumination unit 18. On the display unit 17 the circle 14 and the star 15 are displayed based on the information received from the light field camera 11. A user 19 is looking at the display unit 17 of the device 10. The user 19, especially the eyes of the user 19, are illuminated by the infrared illumination unit 18. The camera 16 tracks the pupils of the user 19 to determine the direction 20 in which the user 19 is looking, thus determining a position on the display unit 17 at which the user is gazing. In the example shown in Fig. 1, the user 19 is looking at the position where the circle 14 is displayed on the display unit 17. This gazing information is used to generate a new image to be displayed on the display unit 17 based on the light field information provided by the light field camera 11. In the newly created image, a focus plane may be set such that the circle 14 is in the focus. Furthermore, a color information, a contrast information or a brightness information of the circle 14 may be adapted such that more details concerning color, contrast and brightness of the circle 14 are displayed on the display unit 17. Furthermore, for example when the user 19 is gazing for at least a certain amount of time at the circle 14, a zooming into the image may be performed thus increasing the displayed size of the circle 14.

The processing for generating the image information based on the light field information and the gaze information may be performed in either the light field camera 11 or the device 10. For example, the gaze information may be sent from the device 10 to the light field camera 11. The light field camera 11 detects the distance to the object gazed at from the information in the image grabbed by the light field camera 11. An image having a focus plane around that distance is generated and a two-dimensional image is created and sent to the device 10 and displayed on the display unit 17. As an alternative, the complete light field information captured by the light field camera 11 may be sent from the light field camera 11 to the device 10, and the device 10 is responsible for detecting the distance at the gaze point, focusing around the distance, creating the image information and the displaying the image information. In addition to using the gaze to control the focus, it is possible to zoom in or out the image or to optimize high dynamic range information, for example color, contrast and brightness. A zooming out may be performed for example, when the user varies the position at which he is gazing rapidly. When changing the gaze to the star, the focus plane may be set accordingly. Naturally, it is also possible to generate the image information not only on the position the user is gazing at, but also based on an area or areas the user is gazing at for example also with varying gaze intensity over a period of time, which is then used when displaying the image on the display unit 17.

Furthermore, it is also possible to control several remote light field cameras in the same way. It is also possible for multiple persons to control the same light field camera. Additionally, it is possible to control the direction of an array microphone using the gaze information in the same way. This may require some more information, concerning for example a placement and characteristics of the light field camera and the array microphone in order to align them. Again, it is possible to control the same remote array microphone by multiple users.

Fig. 2 shows two persons controlling the presentation of each other's light field camera images using gaze information. The image information displayed on the display unit 17 to the user 19 is generated based on light field information captured by light field camera 11 capturing information of the environment 13 comprising the user 29. The gazing information of user 19 is detected by camera 16. The image information displayed on the display unit 17 is thus generated based on the light field information from light field camera 11 and the gaze information of user 19. In the same way, gaze information of user 29 is detected by camera 26 and the image information which is displayed on display unit 27 of device 20 is generated based on light field information captured by light field camera 21 capturing an environment of user 19, and based on the gaze information 30 of user 29. Additionally, device 20 comprises an illumination device 28 for illuminating the user 29 with infrared light to facilitate detecting the gaze information 30 with the camera 26.

The camera 16 and the light field camera 21 may be realized as separate cameras as shown in Fig. 2. However, the camera 16 and the light field camera 21 may be combined in just one light field camera or array camera. In the latter case, at least some of the sub-cameras of the array camera have to be sensitive for infrared light in order to be used for the gaze tracking. This allows furthermore to capture light field information in low light conditions.

The embodiment shown in Fig. 2 is not restricted to two persons, but can be generalized to a multiparty communication with more than two persons.

Fig. 3 shows exemplary method steps for generating an image information based on light field information. In step 31 light field information of an environment is captured. In step 32 a gaze information is detected. The gaze information indicates a position where a user is gazing at while the user is looking on a display unit. In step 33 an image information is generated based on the light field information and the gaze information. In step 34 the image information is output on the display unit to the user.

While exemplary embodiments have been described above, various modifications may be implemented in other embodiments. For example, instead of a light field camera any other kind of computational camera may be used. Furthermore, the gaze tracking may be performed by any other devices, for example a camera tracking the pupils in the visible light range or a camera which is not arranged at the device 10 but which is arranged for example in glasses the user is wearing.

## Claims

1. A method for generating an image information, the method comprising:
- capturing (31) a light field information of an environment (13) with a light field camera (11),
- detecting (32) a gaze information indicating a position on a display unit (17) a user (19) is gazing at, wherein a device (10) comprising the display unit (17) is located remote from the light field camera (11),
- communicating at least one of the light field information and the gaze information via a data communication between the light field camera (11) and the device (10),
- generating (33) an image information based on the light field information and the gaze information, wherein generating (33) the image information comprises determining a position in the environment (13) which corresponds to the position on the display unit (17) the user (19) is gazing at,
- capturing an audio information of the environment (13) with a microphone array, the microphone array capturing an acoustic field information of the environment which is aligned with the light field information, and
- generating an audio output based on the acoustic field information and the position in the environment (13) to include audio information originating from the position in the environment which corresponds to the position on the display unit (17) at which the user is gazing.

2. The method according to claim 1, wherein generating (33) the image information comprises rendering a two-dimensional or a three-dimensional image based on the light field information and the gaze information.

3. The method according to claim 1 or 2, wherein capturing (31) the light field information comprises capturing a four-dimensional light field information with the light field camera (11).

4. The method according to any one of the preceding claims, further comprising:
- displaying (34) the generated image information on the display unit (17) to the user (19).

5. The method according to any one of the preceding claims, wherein generating (33) the image information comprises at least one method step of a group comprising:
- setting a focus plane for generating the image information according to a distance of the position in the environment (13),
- generating a scaled up or scaled down image information containing at least the position in the environment (13),
- adapting a color information of the image information based on a color information of the light field information at the position in the environment (13),
- adapting a contrast information of the image information based on a contrast information of the light field information at the position in the environment (13), and
- adapting a brightness information of the image information based on a brightness information of the light field information at the position in the environment (13).

6. The method according to any one of the preceding claims, further comprising:
- detecting a further gaze information indicating a further position on a further display unit a further user is gazing at,
- generating a further image information based on the light field information and the further gaze information.

7. The method according to any one of the preceding claims, wherein detecting (32) the gaze information comprises:
- detecting a plurality of gaze information over a period of time, each gaze information of the plurality of gaze information indicating a respective position on the display unit (17) the user (19) is gazing at,
- determining the gaze information depending on the plurality of gaze information.

8. A system comprising:
- a light field camera (11) for capturing (31) a light field information of an environment (13),
- a microphone array for capturing an acoustic field information of the environment (13) which is aligned with the light field information,
- a device (10) located remote from the light field camera (11), and
- a data communication coupling the light field camera (11) and the device (10), the device (10) comprising:
- an input for receiving the light field information of the environment (13) via the data communication,
- a display unit (17) for displaying image information to a user (19), and
- a detecting unit (16) for detecting a gaze information indicating a position on the display unit (17) the user (19) is gazing at, and
- a processing unit comprised in the light field camera (11) or the device (10) and configured
to generate an image information based on the light field information and the gaze information,
to determine a position in the environment (13) which corresponds to the position on the display unit (17) the user (19) is gazing at, and
to generate an audio output based on the acoustic field information and the position in the environment (13) to include audio information originating from the position in the environment which corresponds to the position on the display unit (17) at which the user is gazing.

9. The system according to claim 8, wherein the detecting unit (16) comprises an infrared camera.

10. The system according to claim 8 or 9, wherein the detecting unit comprises a light field camera.

11. The system according to any one of claims 8-10, wherein the processing unit is configured to perform the method according to any one of the claims 1-7.

12. The system according to any one of claims 8-11, wherein the device (10) comprises at least one device of a group consisting of a mobile phone, a personal digital assistant, a mobile music player, a tablet computer, a laptop computer, a notebook computer, and a navigation system.

## Patentansprüche

1. Verfahren zum Erzeugen einer Bildinformation, wobei das Verfahren umfasst:
- Aufnehmen (31) einer Lichtfeldinformation einer Umgebung (13) mit einer Lichtfeldkamera (11),
- Detektieren (32) einer Blickinformation, welche eine Position auf einer Anzeigeeinheit (17) angibt, welche ein Benutzer (19) anblickt, wobei sich ein Gerät (10), welches die Anzeigeeinheit (17) umfasst, entfernt von der Lichtfeldkamera (11) befindet,
- Kommunizieren mindestens einer von der Lichtfeldinformation und der Blickinformation über eine Datenkommunikation zwischen der Lichtfeldkamera (11) und dem Gerät (10),
- Erzeugen (33) einer Bildinformation basierend auf der Lichtfeldinformation und der Blickinformation, wobei das Erzeugen (33) der Bildinformation ein Bestimmen einer Position in der Umgebung (13) umfasst, welche der Position auf der Anzeigeeinheit (17) entspricht, welche der Benutzer (19) anblickt,
- Aufnehmen einer Audioinformation der Umgebung (13) mit einem Mikrofonarray, wobei das Mikrofonarray eine Akkustikfeldinformation der Umgebung aufnimmt, welche mit der Lichtfeldinformation im Einklang ist, und
- Erzeugen einer Audioausgabe auf der Grundlage der Akkustikfeldinformation und der Position in der Umgebung (13), welche eine Audioinformation enthält, welche von der Position in der Umgebung stammt, welche der Position auf der Anzeigeeinheit (17) entspricht, welche der Benutzer anblickt.

2. Verfahren nach Anspruch 1, wobei das Erzeugen (33) der Bildinformation ein Rendern eines zweidimensionalen oder dreidimensionalen Bildes basierend auf der Lichtfeldinformation und der Blickinformation umfasst.

3. Verfahren nach Anspruch 1 oder 2, wobei das Aufnehmen (31) der Lichtfeldinformation ein Aufnehmen einer vierdimensionalen Lichtfeldinformation mit der Lichtfeldkamera (11) umfasst.

4. Verfahren nach einem der vorhergehenden Ansprüche, weiter umfassend:
- Anzeigen (34) der erzeugten Bildinformation auf der Anzeigeeinheit (17) für den Benutzer (19).

5. Verfahren nach einem der vorhergehenden Ansprüche, wobei das Erzeugen (33) der Bildinformation mindestens einen Verfahrensschritt aus einer Gruppe umfasst, welche folgende Verfahrensschritte umfasst:
- Einstellen einer Fokusebene zum Erzeugen der Bildinformation entsprechend einem Abstand der Position in der Umgebung (13),
- Erzeugen einer vergrößerten oder verkleinerten Bildinformation, welche zumindest die Position in der Umgebung (13) enthält,
- Anpassen einer Farbinformation der Bildinformation basierend auf einer Farbinformation der Lichtfeldinformation an der Position in der Umgebung (13)
- Anpassen einer Kontrastinformation der Bildinformation basierend auf einer Kontrastinformation der Lichtfeldinformation an der Position in der Umgebung (13), und
- Anpassen einer Helligkeitsinformation der Bildinformation basierend auf einer Helligkeitsinformation der Lichtfeldinformation an der Position in der Umgebung (13).

6. Verfahren nach einem der vorhergehenden Ansprüche, weiter umfassend:
- Detektieren einer weiteren Blickinformation, welche eine weitere Position auf einer weiteren Anzeigeeinheit angibt,
- Erzeugen einer weiteren Bildinformation basierend auf der Lichtfeldinformation und der weiteren Blickinformation.

7. Verfahren nach einem der vorhergehenden Ansprüche, wobei das Detektieren (32) der Blickinformation umfasst:
- Detektieren einer Vielzahl von Blickinformationen über einen bestimmten Zeitraum hinweg, wobei jede Blickinformation der Vielzahl von Blickinformationen eine entsprechende Position auf der Anzeigeeinheit (17) angibt, welche der Benutzer (19) anblickt,
- Bestimmen der Blickinformation basierend auf der Vielzahl der Blickinformationen.

8. System, umfassend:
- eine Lichtfeldkamera (11) zum Aufnehmen (31) einer Lichtfeldinformation einer Umgebung (13),
- ein Mikrofonarray zum Aufnehmen einer Akkustikfeldinformation der Umgebung (13), welche mit der Lichtfeldinformation im Einklang ist,
- ein Gerät (10), welches sich entfernt von der Lichtfeldkamera (11) befindet, und
- eine Datenkommunikation, welche die Lichtfeldkamera (11) und das Gerät (10) koppelt,
wobei das Gerät (10) folgende Elemente umfasst:
- einen Eingang zum Empfangen der Lichtfeldinformation der Umgebung (13) über die Datenkommunikation,
- eine Anzeigeeinheit (17) zum Anzeigen einer Bildinformation für einen Benutzer (19), und
- eine Detektionseinheit (16) zum Detektieren einer Blickinformation, welche eine Position auf der Anzeigeeinheit (17) angibt, welche der Benutzer (19) anblickt, und
- eine Verarbeitungseinheit, welche in der Lichtfeldkamera (11) oder der Vorrichtung (10) enthalten ist und derart konfiguriert ist, dass sie
eine Bildinformation auf Basis der Lichtfeldinformation und der Blickinformation erzeugt,
eine Position in der Umgebung (13) bestimmt, welche der Position auf der Anzeigeeinheit (17) entspricht, welche der Benutzer (19) anblickt, und
eine Audioausgabe basierend auf der Akkustikfeldinformation und der Position in der Umgebung (13) erzeugt, welche eine Audioinformation enthält, welche von der Position in der Umgebung stammt, welche der Position auf der Anzeigeeinheit (17) entspricht, welche der Benutzer anblickt.

9. System nach Anspruch 8, wobei die Detektionseinheit (16) eine Infrarotkamera umfasst.

10. System nach Anspruch 8 oder 9, wobei die Detektionseinheit eine Lichtfeldkamera umfasst.

11. System nach einem der Ansprüche 8-10, wobei die Verarbeitungseinheit derart konfiguriert ist, dass sie das Verfahren nach einem der Ansprüche 1-7 durchführt.

12. System nach einem der Ansprüche 8-11, wobei das Gerät (10) mindestens ein Gerät aus einer Gruppe bestehend aus einem Mobiltelefon, einem persönlichen Digital-Assistenten, einem tragbaren Musik-Player, einem Tablet-Computer, einem Laptop-Computer, einem Notebook-Computer und einem Navigationssystem, umfasst.

## Revendications

1. Procédé de génération d'informations d'image, le procédé consistant à :
- capturer (31) des informations de champ de lumière d'un environnement (13) au moyen d'un appareil de prise de vue à champ de lumière (11),
- détecter (32) des informations de regard indiquant une position qu'un utilisateur (19) regarde sur une unité d'affichage (17), un dispositif (10) comprenant l'unité d'affichage (17) étant situé à distance de l'appareil de prise de vue à champ de lumière (11),
- communiquer au moins certaines des informations de champ de lumière et des informations de regard par le biais d'une communication de données entre l'appareil de prise de vue à champ de lumière (11) et le dispositif (10),
- générer (33) des informations d'image sur la base des informations de champ de lumière et des informations de regard, la génération (33) des informations d'image consistant à déterminer une position dans l'environnement (13) qui correspond à la position que l'utilisateur (19) regarde sur l'unité d'affichage (17),
- capturer des informations audio de l'environnement (13) au moyen d'un réseau de microphones, le réseau de microphones capturant des informations de champ acoustique de l'environnement qui sont alignées avec les informations de champ de lumière, et
- générer une sortie audio sur la base des informations de champ acoustique et de la position dans l'environnement (13) pour qu'elle comprenne des informations audio provenant de la position dans l'environnement qui correspond à la position que l'utilisateur regarde sur l'unité d'affichage (17).

2. Procédé selon la revendication 1, dans lequel la génération (33) des informations d'image consiste à restituer une image bidimensionnelle ou tridimensionnelle sur la base des informations de champ de lumière et des informations de regard.

3. Procédé selon la revendication 1 ou 2, dans lequel la capture (31) des informations de champ de lumière consiste à capturer des informations de champ de lumière quadridimensionnelles au moyen de l'appareil de prise de vue à champ de lumière (11).

4. Procédé selon l'une quelconque des revendications précédentes, consistant en outre à :
- afficher (34) les informations d'image générées sur l'unité d'affichage (17) à destination de l'utilisateur (19).

5. Procédé selon l'une quelconque des revendications précédentes, dans lequel la génération (33) des informations d'image comprend au moins une étape de procédé d'un groupe comprenant :
- la définition d'un plan focal pour générer les informations d'image conformément à une distance de la position dans l'environnement (13),
- la génération d'informations d'image ayant fait l'objet d'une augmentation ou d'une réduction d'échelle contenant au moins la position dans l'environnement (13),
- l'adaptation d'informations de couleurs des informations d'image sur la base d'informations de couleurs des informations de champ de lumière au niveau de la position dans l'environnement (13),
- l'adaptation d'informations de contraste des informations d'image sur la base d'informations de contraste des informations de champ de lumière au niveau de la position dans l'environnement (13), et
- l'adaptation d'informations de luminosité des informations d'mage sur la base d'informations de luminosité des informations de champ de lumière au niveau de la position dans l'environnement (13).

6. Procédé selon l'une quelconque des revendications précédentes, consistant en outre à :
- détecter d'autres informations de regard indiquant une autre position qu'un autre utilisateur regarde sur une autre unité d'affichage,
- générer d'autres informations d'image sur la base des informations de champ de lumière et des autres informations de regard.

7. Procédé selon l'une quelconque des revendications précédentes, dans lequel la détection (32) des informations de regard consiste à :
- détecter une pluralité d'informations de regard sur une certaine période de temps, toutes les informations de regard de la pluralité d'informations de regard indiquant une position respective que l'utilisateur (19) regarde sur l'unité d'affichage (17),
- déterminer les informations de regard en fonction de la pluralité d'informations de regard.

8. Système comprenant :
- un appareil de prise de vue à champ de lumière (11) permettant de capturer (31) des informations de champ de lumière d'un environnement (13),
- un réseau de microphones permettant de capturer des informations de champ acoustique de l'environnement (13) qui sont alignées avec les informations de champ de lumière,
- un dispositif (10) situé à distance de l'appareil de prise de vue à champ de lumière (11), et
- une communication de données couplant l'appareil de prise de vue à champ de lumière (11) et le dispositif (10), le dispositif (10) comprenant :
- une entrée destinée à recevoir les informations de champ de lumière de l'environnement (13) par le biais de la communication de données,
- une unité d'affichage (17) destinée à afficher des informations d'image à destination d'un utilisateur (19), et
- une unité de détection (16) destinée à détecter des informations de regard indiquant une position que l'utilisateur (19) regarde sur l'unité d'affichage (17), et
- une unité de traitement comprise dans l'appareil de prise de vue à champ de lumière (11) ou dans le dispositif (10) et configurée pour :
générer des informations d'image sur la base des informations de champ de lumière et des informations de regard,
déterminer une position dans l'environnement (13) qui correspond à la position que l'utilisateur (19) regarde sur l'unité d'affichage (17), et
générer une sortie audio sur la base des informations de champ acoustique et de la position dans l'environnement (13) pour qu'elle comprenne des informations audio provenant de la position dans l'environnement qui correspond à la position que l'utilisateur regarde sur l'unité d'affichage (17).

9. Système selon la revendication 8, dans lequel l'unité de détection (16) comprend un dispositif de prise de vue à infrarouge.

10. Système selon la revendication 8 ou 9, dans lequel l'unité de détection comprend un appareil de prise vue à champ de lumière.

11. Système selon l'une quelconque des revendications 8 à 10, dans lequel l'unité de traitement est configurée pour mettre en oeuvre le procédé selon l'une quelconque des revendications 1 à 7.

12. Système selon l'une quelconque des revendications 8 à 11, dans lequel le dispositif (10) consiste en au moins un dispositif d'un groupe constitué d'un téléphone mobile, d'un assistant numérique personnel, d'un lecteur de musique mobile, d'un ordinateur tablette, d'un ordinateur portatif, d'un ordinateur bloc-notes et d'un système de navigation.
